# FASCICULE DE BREVET EUROPEEN

(11) **EP 4 359 649 B1**
(45) Date de publication et mention de la délivrance du brevet: **22.10.2025**
(21) Numéro de dépôt: 22744251.4
(22) Date de dépôt: 16.06.2022
(51) Int. Cl.: F01D 5/02, F01D 5/14, F01D 5/28, F04D 29/32

(54) **PROCEDE DE FABRICATION D'UNE AUBE COMPOSITE DE TURBOMACHINE, L'AUBE COMPRENANT UN BOUCLIER DE RENFORT PERMETTANT UN ÉQUILIBRAGE**
VERFAHREN ZUR HERSTELLUNG EINER VERBUNDSCHAUFEL FÜR EINE TURBOMASCHINE, WOBEI DIE VERBUNDSCHAUFEL EINE UMMANTELUNG AUFWEIST, DIE EINE WUCHTUNG DER VERBUNDSCHAUFEL ERLAUBT
METHOD OF MANUFACTURE OF A COMPOSITE BLADE FOR A TURBOMACHINE, THE BLADE COMPRISING A PROTECTIVE SHEATH THAT ALLOWS FOR BALANCING

(30) Priorité: 21.06.2021 FR 2106574
(43) Date de publication de la demande: 01.05.2024
(73) Titulaire: SAFRAN AIRCRAFT ENGINES, 75015 Paris (FR)
(72) Inventeur: MOUROT, Maxime Mathieu, 77550 MOISSY-CRAMAYEL (FR); LAUWICK, Lucas Antoine Christophe, 77550 MOISSY-CRAMAYEL (FR); TREBAOL, Julien, 77550 MOISSY-CRAMAYEL (FR)
(74) Mandataire: Gevers & Orès
(86) Numéro de dépôt international: PCT/FR2022/051176
(87) Numéro de publication internationale: WO 2022/269174

(56) Documents cités:
- EP-A1- 2 037 082
- CA-A1- 2 999 360
- CA-A1- 3 009 226
- FR-A1- 3 046 557

## Description

### Domaine technique de l'invention

La présente invention concerne un procédé de fabrication d'une aube en matériau composite pour une turbomachine, en particulier d'aéronef, ainsi qu'un procédé d'assemblage d'un module de turbomachine, tel qu'un module de soufflante.

### Arrière-plan technique

L'arrière-plan technique comprend notamment les documents CA-A1-2 999 360, CA-A1-3 009 226 et EP-A1-2 037 082.

Une turbomachine d'aéronef comporte une ou plusieurs hélice(s) qui peuvent être carénée(s) ou non carénée(s). La présente invention s'applique notamment aux aubes d'une soufflante, c'est-à-dire aux aubes d'une hélice carénée mais aussi à d'autres types d'hélices, telles que les hélices non carénées des turbopropulseurs par exemple.

Une hélice de turbomachine est traversée par un flux d'air et ses aubes peuvent subir des dommages par usure ou impact, par exemple du type FOD (acronyme de l'anglais *Flying Object Damage*) provoqué par l'impact d'un oiseau par exemple sur les aubes.

La présente invention concerne la fabrication d'une aube en matériau composite, par exemple à matrice organique (CMO), dont au moins un bord est renforcé par un bouclier de renfort.

Une aube composite est formée à partir d'une préforme tissée noyée dans une matrice polymérique (du type époxy par exemple). La préforme est obtenue par tissage en trois dimensions de fibres, en général de carbone.

Il est connu de renforcer le bord d'attaque de cette aube par un bouclier métallique rapporté. Le bouclier, tel que décrit dans la demande FR-A1-3 046 557, comporte deux ailes latérales s'étendant respectivement sur un intrados et un extrados de la pale, et un nez reliant les deux ailes.

Ces aubes composites peuvent équiper un module de turbomachine tel qu'un module de soufflante. Un module de soufflante comprend un disque de rotor sur lequel sont montées les aubes. Ce type de module doit être équilibré pour supprimer ou diminuer tout balourd. L'équilibrage est classiquement réalisé en rapportant et fixant des masselottes sur le module, ces masselottes ayant des masses prédéterminées et étant positionnées précisément pour compenser le balourd précité.

Les masselottes sont fixées sur le disque ou le cône de soufflante, ce qui permet d'ajuster le poids moment radial du module complet. Il n'existe actuellement pas de solution pour ajuster ce paramètre sur les aubes individuelles.

Le moment d'une force par rapport à un point donné est une grandeur physique vectorielle traduisant l'aptitude de cette force à faire tourner un système mécanique autour de ce point. Dans le contexte de l'invention, la force dépend principalement de la masse d'une aube. Le moment de la force considéré pour l'équilibrage dépend donc du poids et est appelé « poids moment ». La projection de ce moment sur l'axe longitudinal de l'aube qui est en général un axe radial (par rapport à l'axe de rotation de la souffante et de l'aube), s'appelle « poids moment radial ». C'est une grandeur scalaire algébrique exprimée dans la même unité que le poids moment.

Le poids moment radial des aubes de soufflante est un paramètre critique sur les problématiques de durée de vie du disque de soufflante et des aubes de soufflante ou d'équilibrage du jeu complet d'aubes. Il y a donc un intérêt à diminuer la dispersion de la production sur ce paramètre. Afin d'améliorer la capabilité en poids moment radial de l'aube, il serait utile de pouvoir faire varier la masse de chacune des aubes d'environ +/-15g dans un cas particulier de réalisation.

La présente invention propose une solution simple, efficace et économique au besoin évoqué ci-dessus.

### Résumé de l'invention

La présente invention propose un procédé de fabrication d'une aube en matériau composite pour une turbomachine, en particulier d'aéronef, comprenant les étapes de :
a) et b) préparation d'une pale à base de fibres noyées dans une résine, la pale comportant un extrados et un intrados s'étendant entre un bord d'attaque et un bord de fuite,
c) fixation d'un bouclier de renfort sur un bord de la pale, ce bouclier ayant une forme générale allongée le long d'un axe d'allongement de la pale,
caractérisé en ce que le bouclier fixé à l'étape c) comprend au moins un surdimensionnement de façon à pouvoir ajuster le poids moment de l'aube le long dudit axe en fonction de la position du bouclier sur le bord le long de cet axe, et en ce que le procédé comprend une étape suivante d) de suppression d'un surplus du bouclier.

L'invention propose ainsi d'ajuster le poids moment en particulier radial d'une aube, avant son montage dans un module par exemple de soufflante. Les aubes peuvent ainsi être équilibrées avant l'assemblage du module. Ceci permet de supprimer l'équilibrage du module complet et donc d'éviter d'utiliser des masselottes d'équilibrage, ce qui est particulièrement avantageux.

En général, les pales des aubes ont des profils complexes, en général vrillées et cambrées. Les boucliers ont des formes configurées pour adopter celles des pales et peuvent avoir chacune une section évolutive en direction longitudinale. On comprend donc que le poids moment de l'aube est affecté par le positionnement du bouclier sur le bord, le long de l'axe précité.

Le bouclier a en général une longueur qui est fonction, et en particulier qui est égale, à la longueur ou dimension longitudinale du bord sur lequel le bouclier est monté. Le surdimensionnement du bouclier, en particulier en longueur, autorise des positionnements longitudinaux différents du bouclier sur le bord qui sera ainsi toujours recouvert par le bouclier quelle que soit la position du bouclier, comme cela sera expliqué plus en détail dans ce qui suit.

Le procédé selon l'invention peut comprendre une ou plusieurs des caractéristiques et/ou étapes suivantes, prises isolément les unes des autres ou en combinaison les unes avec les autres :
- les étapes a) et b) comprennent respectivement le :
   a) tissage de fibres en trois dimensions de façon à obtenir une préforme fibreuse, et le
   b) montage de la préforme dans un moule et injection de résine dans ce moule, de façon à obtenir une pale comportant un extrados et un intrados s'étendant entre un bord d'attaque et un bord de fuite,
- les étapes a) et b) comprennent l'empilement de nappes ou tissus de fibres, qui sont préalablement ou ensuite imprégnés avec une résine ;
- ledit surdimensionnement est une surlongueur du bouclier ;
- ledit surplus est un surplus longitudinal du bouclier ;
- le surplus est situé à une extrémité inférieure ou radialement interne de la pale, ou à une extrémité supérieure ou radialement externe de la pale ;
- le procédé comprend une étape o) préalable d'étude de l'impact de la position du bouclier sur le bord de la pale, le long dudit axe, sur le poids moment de l'aube le long de cet axe ;
- ledit surplus est supprimé par usinage du bouclier.

La présente invention concerne également un procédé d'assemblage d'un module de turbomachine, tel qu'un module de soufflante, comprenant une étape de e) montage de plusieurs aubes sur un disque de rotor, chacune des aubes étant fabriquée par un procédé tel que décrit ci-dessus. L'ensemble comprenant le disque de rotor et les aubes forme une roue.

Avantageusement, le procédé est dépourvu d'étape d'équilibrage du module, et en particulier de la roue, postérieurement au montage des aubes sur le disque.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en perspective d'une aube d'hélice de turbomachine, et en particulier de soufflante de turbomachine,
[Fig.2] La figure 2 est une vue schématique en coupe transversale d'un bouclier d'une aube telle que celle représentée à la figure 1,
[Fig.3] La figure 3 est une vue très schématique d'un module de soufflante d'une turbomachine d'aéronef,
[Fig.4] La figure 4 est un organigramme montrant des étapes d'un procédé d'assemblage d'un module de turbomachine, selon la technique antérieure à l'invention ;
[Fig.5] La figure 5 est un organigramme montrant des étapes d'un procédé d'assemblage d'un module de turbomachine, selon l'invention ; et
[Fig.6a-6d] Les figures 6a à 6d sont des vues très schématiques d'une aube composite, au cours d'étapes d'un premier mode de réalisation d'un procédé selon l'invention pour les figures 6a et 6b, et au cours d'étapes d'un second mode de réalisation d'un procédé selon l'invention pour les figures 6c et 6d.

### Description détaillée de l'invention

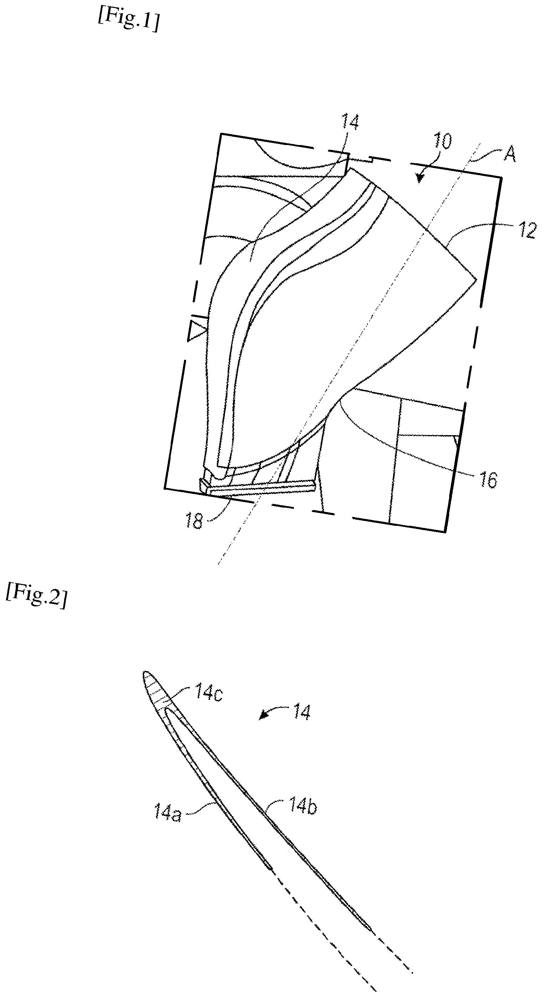

La figure 1 montre une aube 10 d'hélice et en particulier de soufflante d'une turbomachine d'aéronef. Cette aube 10 comprend une pale 12 en composite à matrice organique et un bouclier métallique 14 collé sur un bord d'attaque. La pale 12 comporte en outre un bord de fuite 16, opposé au bord d'attaque, et un intrados et un extrados s'étendant entre les bords d'attaque et de fuite de la pale.

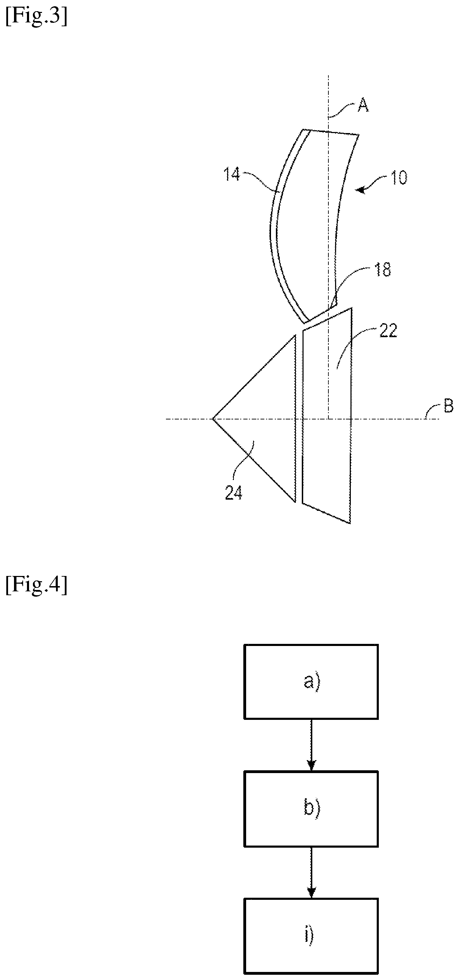

L'aube présente un axe d'allongement noté A qui est un axe radial par rapport à l'axe longitudinal B de la turbomachine dans laquelle est montée cette aube (figure 3). Une extrémité longitudinale de la pale 12 est libre et l'extrémité longitudinale opposée est reliée à un pied 18 pour la fixation de l'aube à un rotor de la turbomachine.

Comme cela est visible à la figure 2, le bouclier 14 comporte deux ailes latérales 14a et 14b s'étendant respectivement sur l'extrados et l'intrados de la pale 12, et un nez 14c reliant les deux ailes 14a et 14b.

Les ailes 14a, 14b définissent entre elles une cavité de réception du bord d'attaque de la pale 12, ainsi que de colle de solidarisation du bouclier à la pale.

L'aube 10 peut être fabriquée par un procédé comprenant les étapes de :
a) tissage de fibres en trois dimensions de façon à obtenir une préforme fibreuse,
b) montage de la préforme dans un moule et injection de résine dans ce moule, de façon à obtenir une pale 12 comportant un extrados et un intrados s'étendant entre un bord d'attaque et un bord de fuite, et
c) fixation du bouclier 14 sur le bord de la pale.

En variante, l'aube 10 pourrait être fabriquée par empilement de nappes ou tissus de fibres, qui sont préalablement ou ensuite imprégnés avec une résine. Plusieurs variantes sont envisageables dans la mesure où le matériau composite de la pale comprend des fibres noyées dans une résine.

Les aubes 10 peuvent être montées sur un disque de rotor 22 pour réaliser une roue de rotor ou un rotor de soufflante, comme cela est visible à la figure 3. Dans le cas d'un module de soufflante, le disque de rotor 22 comprend des aubes 10 à sa périphérie et peut être fixé à un cône 24.

L'organigramme de la figure 4 illustre des étapes d'assemblage d'un module de soufflante, selon la technique antérieure. Pour l'essentiel, ce procédé comprend trois étapes à savoir :
a) la fabrication des aubes telle qu'évoquée ci-dessus avec la fixation d'un bouclier, par exemple par collage, sur le bord d'une pale,
b) le montage des aubes sur le disque de rotor, puis enfin

i) l'équilibrage du module en évaluant son balourd et en le corrigeant par des masselottes de poids prédéterminés, rapportées et fixées dans des endroits précis du module (par exemple sur le cône 24).

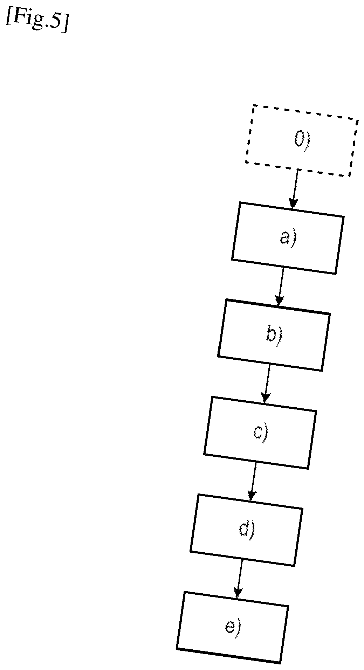

L'organigramme de la figure 5 illustre des étapes d'assemblage d'un module, par exemple, de soufflante, selon l'invention. Comme on peut le constater, la dernière étape i) du procédé de la figure 4 est supprimée puisqu'il n'y normalement plus besoin d'équilibrage du module postérieurement au montage des aubes sur le disque. Cela est rendu possible grâce à l'équilibrage individuel de chaque aube, par l'ajustement de leur poids moment radial, c'est-à-dire de leur poids moment par rapport à l'axe radial vis-à-vis de l'axe de rotation de l'aube ou du module.

Pour l'essentiel, le procédé de la figure 5 comprend, en plus des étapes a) et b) précitées, les étapes de :
c) et d), collage du bouclier sur le bord de la pale, ce bouclier étant positionné sur le bord de la pale et dimensionné en fonction du poids moment radial de l'aube, cette étape étant répétée pour chacune des aubes du module,
e) et montage des aubes sur le disque de rotor.

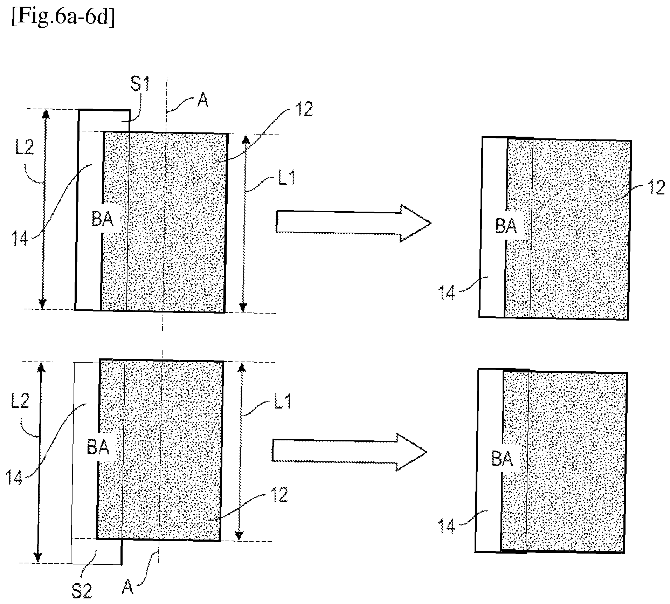

Avantageusement, et comme illustré aux figures 6a à 6d, le bouclier fixé à l'étape c) comprend au moins un surdimensionnement (L2-L1) de façon à pouvoir ajuster le poids moment radial de l'aube en fonction de la position longitudinale du bouclier sur le bord. Ce surdimensionnement est quantifié en fonction de l'équilibrage à réaliser et peut avoir par exemple une masse équivalente de 15g.

Ce surdimensionnement (L2-L1) est de préférence réalisé le long de l'axe longitudinal A ou radial de l'aube et est donc une surlongueur, comme illustré dans les dessins. Une surlongueur représentant une masse de 15g, peut par exemple représenter une surlongueur de 1,5cm le long de l'axe A dans un cas particulier de réalisation.

Lors de l'ajustement de la position du bouclier sur le bord, on peut comprendre que cette surlongueur se traduira par un dépassement du bouclier au-delà de l'extrémité supérieure ou radialement externe de la pale (figure 6a - en haut à gauche sur la figure), ou au-delà de l'extrémité inférieure ou radialement interne de la pale (figure 6c - en bas à droite sur la figure), voire même les deux si la pale est par exemple centrée vis-à-vis du bouclier.

La surlongueur est quantifiée de façon à ce qu'elle autorise des déplacements suffisants du bouclier sur la pale pour ajuster le poids moment radial de l'aube, et de telle sorte que, pour chacune de ces positions, le bord d'attaque de la pale soit recouvert et protégé par le bouclier. On comprend donc que cette surlongueur sera quantifiée en fonction du déplacement maximal envisageable du bouclier sur le bord, pour ajuster le poids moment radial de l'aube.

Dans le cas de la figure 6a, le poids moment radial de l'aube a une valeur minimale. Dans le cas de la figure 6c, le poids moment radial de l'aube a une valeur maximale.

L'étape d) qui suit l'étape c) de positionnement et de collage du bouclier 14 consiste à supprimer le surplus, ici longitudinal, du bouclier qui ne doit pas en général dépasser du bord de la pale 12. Dans le cas illustré à la figure 6b, le surplus S1 situé à l'extrémité radialement externe de l'aube est supprimé. Dans le cas illustré à la figure 6d, le surplus S1 situé à l'extrémité radialement interne de l'aube est supprimé. Cette suppression peut être réalisée par usinage.

Avant le collage d'un bouclier sur une pale, il peut être utile d'étudier au préalable, lors d'une étape o), l'impact de la position du bouclier sur le bord de la pale, sur le poids moment radial de l'aube.

L'invention propose ainsi d'ajuster le poids moment radial des aubes avant l'assemblage d'un module de turbomachine, qui ne nécessite donc pas forcément d'équilibrage propre.

## Revendications

1. Procédé de fabrication d'une aube (10) en matériau composite pour une turbomachine, en particulier d'aéronef, comprenant les étapes de :
a) et b) préparation d'une pale à base de fibres noyées dans une résine, la pale comportant un extrados et un intrados s'étendant entre un bord d'attaque et un bord de fuite,
c) fixation d'un bouclier de renfort (14) sur un bord de la pale, ce bouclier ayant une forme générale allongée le long d'un axe d'allongement (A) de la pale,
**caractérisé en ce que** le bouclier (14) fixé à l'étape c) comprend au moins un surdimensionnement (L2-L1) de façon à pouvoir ajuster le poids moment de l'aube le long dudit axe (A) en fonction de la position du bouclier sur le bord le long de cet axe, et **en ce que** le procédé comprend une étape suivante d) de suppression d'un surplus (S1, S2) du bouclier.

2. Procédé selon la revendication 1, dans lequel les étapes a) et b) comprennent respectivement le :
a) tissage de fibres en trois dimensions de façon à obtenir une préforme fibreuse, et le
b) montage de la préforme dans un moule et injection de résine dans ce moule, de façon à obtenir une pale (12).

3. Procédé selon la revendication 1, dans lequel les étapes a) et b) comprennent l'empilement de nappes ou tissus de fibres, qui sont préalablement ou ensuite imprégnés avec une résine.

4. Procédé selon l'une des revendications précédentes, dans lequel ledit surdimensionnement (L2-L1) est une surlongueur du bouclier.

5. Procédé selon l'une des revendications précédentes, dans lequel ledit surplus (S1, S2) est un surplus longitudinal du bouclier (14).

6. Procédé selon la revendication 4, dans lequel le surplus (S1, S2) est situé à une extrémité inférieure ou radialement interne de la pale, ou à une extrémité supérieure ou radialement externe de la pale.

7. Procédé selon l'une des revendications précédentes, dans lequel il comprend une étape o) préalable d'étude de l'impact de la position du bouclier (14) sur le bord de la pale (12), le long dudit axe (A), sur le poids moment de l'aube (10) le long de cet axe.

8. Procédé selon l'une des revendications précédentes, dans lequel ledit surplus (S1, S2) est supprimé par usinage du bouclier (14).

9. Procédé d'assemblage d'un module de turbomachine, tel qu'un module de soufflante, comprenant une étape de e) montage de plusieurs aubes (10) sur un disque de rotor (22), chacune des aubes étant fabriquée par un procédé selon l'une des revendications précédentes.

## Patentansprüche

1. Verfahren zur Anfertigung einer Schaufel (10) aus Verbundmaterial für ein Turbotriebwerk, insbesondere eines Luftfahrzeugs, beinhaltend die Schritte:
a) und b) Herstellung eines Blatts auf Basis von in einem Harz getränkten Fasern, wobei das Blatt eine Saugfläche und eine Druckfläche umfasst, die sich zwischen einer Anströmkante und einer Abströmkante erstrecken,
c) Befestigung eines Verstärkungsschildes (14) an einer Kante des Blatts, wobei der Schild entlang einer Verlängerungsachse (A) des Blatts eine allgemein längliche Form aufweist, **dadurch gekennzeichnet, dass** der in Schritt c) befestigte Schild (14) mindestens eine Überdimensionierung (L2-L1) derart beinhaltet, um das Momentgewicht der Schaufel entlang der Achse (A) in Abhängigkeit der Position des Schilds an der Kante entlang dieser Achse anpassen zu können, und dadurch, dass das Verfahren einen folgenden Schritt d) zur Beseitigung eines Überschusses (S1, S2) des Schildes beinhaltet.

2. Verfahren nach Anspruch 1, wobei die Schritte a) und b) jeweils Folgendes beinhalten:
a) Weben von Fasern in drei Dimensionen derart, um eine faserige Vorform zu erhalten, und die
b) Montage der Vorform in eine Form und Einspritzung von Harz in diese Form derart, um ein Blatt (12) zu erhalten.

3. Verfahren nach Anspruch 1, wobei die Schritte a) und b) die Stapelung von Tüchern oder Geweben aus Fasern beinhalten, die zuvor oder danach mit einem Harz imprägniert werden.

4. Verfahren nach einem der vorstehenden Ansprüche, wobei die Überdimensionierung (L2-L1) eine Überlänge des Schildes ist.

5. Verfahren nach einem der vorstehenden Ansprüche, wobei der Überschuss (S1, S2) ein Überschuss in Längsrichtung des Schildes (14) ist.

6. Verfahren nach Anspruch 4, wobei sich der Überschuss (S1, S2) an einem unteren oder radial internen Ende des Blatts oder an einem oberen oder radial externen Ende des Blatts befindet.

7. Verfahren nach einem der vorstehenden Ansprüche, wobei es einen vorherigen Schritt o) des Studiums der Auswirkung der Position des Schildes (14) auf der Kante des Blatts (12), entlang der Achse (A), auf das Momentgewicht der Schaufel (10) entlang dieser Achse beinhaltet.

8. Verfahren nach einem der vorstehenden Ansprüche, wobei der Überschuss (S1, S2) durch Bearbeiten des Schildes (14) beseitigt wird.

9. Verfahren zum Zusammenbau eines Moduls eines Turbotriebwerks, wie ein Gebläsemodul, beinhaltend einen Schritt e) der Montage mehrere Schaufeln (10) an einer Rotorscheibe (22), wobei jede der Schaufeln durch ein Verfahren nach einem der vorstehenden Ansprüche angefertigt wird.

## Claims

1. A method for manufacturing a vane (10) made of composite material for a turbine engine, in particular for an aircraft, comprising the steps of:
a) and b) preparing a blade based on fibres embedded in a resin, the blade comprising a suction side and a pressure side extending between a leading edge and a trailing edge,
c) attaching a reinforcing shield (14) to an edge of the blade, this shield having a generally elongate shape along an axis of elongation (A) of the blade, **characterized in that** the shield (14) attached in step c) comprises at least one excess dimension (L2-L1) so as to be able to adjust the moment weight of the vane along said axis (A) according to the position of the shield on the edge along said axis, and **in that** the method comprises a subsequent step d) of removing a surplus portion (S1, S2) of the shield.

2. The method according to claim 1, wherein steps a) and b) respectively comprise:
a) weaving of fibres in three dimensions to obtain a fibrous preform, and the
b) mounting of the preform in a mould and injecting resin into the mould so as to obtain a blade (12).

3. The method according to claim 1, wherein steps a) and b) comprise the stacking of fibre plies or mats, which are previously or subsequently impregnated with a resin.

4. The method according to one of the preceding claims, wherein said excess dimension (L2-L1) is an extra length of the shield.

5. The method according to one of the preceding claims, wherein said surplus portion (S1, S2) is a longitudinal surplus portion of the shield (14).

6. The method according to claim 4, wherein the surplus portion (S1, S2) is located at a lower or radially internal end of the blade, or at an upper or radially external end of the blade.

7. The method according to one of the preceding claims, wherein it comprises a preliminary step o) of studying the impact of the position of the shield (14) on the edge of the blade (12), along said axis (A), on the moment weight of the vane (10) along this axis.

8. The method according to one of the preceding claims, wherein said surplus portion (S1, S2) is removed by machining the shield (14).

9. A method of assembling a turbine engine module, such as a fan module, comprising a step of e) mounting a plurality of vanes (10) on a rotor disc (22), each of the vanes being manufactured by a method according to one of the preceding claims.
